# EUROPÄISCHE PATENTSCHRIFT

(11) **EP 2 974 580 B1**
(45) Veröffentlichungstag und Bekanntmachung des Hinweises auf die Patenterteilung: **07.06.2017**
(21) Anmeldenummer: 15401073.0
(22) Anmeldetag: 09.07.2015
(51) Int. Cl.: A01B 3/42, A01B 3/421, A01B 3/46

(54) **DREHPFLUG**
REVERSIBLE PLOUGH
CHARRUE BRABANT

(30) Priorität: 18.07.2014 DE 102014110099
(43) Veröffentlichungstag der Anmeldung: 20.01.2016
(73) Patentinhaber: Amazonen-Werke H. Dreyer GmbH & Co. KG, 49205 Hasbergen (DE)
(72) Erfinder: Laumann, Bernhard, 48477 Hörstel - Riesenbeck (DE); Prangemeier, Dominik, 49084 Osnabrück (DE)

(56) Entgegenhaltungen:
- EP-A1- 0 839 442
- EP-A1- 1 731 009
- EP-A1- 2 220 922
- DE-A1- 2 850 118
- DE-A1-102005 037 852
- DE-U1- 9 014 319
- DE-U1-202011 101 162
- GB-A- 950 912

## Beschreibung

Die Erfindung bezieht sich auf einen Drehpflug mit einem an einem Anbaubock zur Verbindung des Drehpfluges mit einem landwirtschaftlichen Zugfahrzeug abstützbaren, dreh- und/oder schwenkbar ausgebildeten Pflugrahmen und mit auf gegenüberliegenden Seiten des Pflugrahmens angeordneten Pflugscharreihen mit Pflugkörpern, wobei durch eine über eine Antriebsvorrichtung eingeleitete Drehbewegung des Pflugrahmens wahlweise die eine oder die andere Pflugscharreihe in ihre Betriebsstellung oder in ihre Außerbetriebsstellung überführbar ist und mit einem den Pflugrahmen in der Betriebsstellung der einen Pflugscharreihe und in den Pflugrahmen in der Betriebsstellung der anderen Pflugscharreihe auf dem Erdboden abstützenden, über ein Fahrgestell mit dem Pflugrahmen verbundenen Stützrad, wobei das Fahrgestell des Stützrades über einen Stabilisator mit dem Anbaubock kardanisch verbunden ist und der Pflugrahmen um eine Dreh- oder Schwenkachse um den Stabilisator und das Fahrgestell und das Stützrad verschwenkbar ist.

Drehpflüge der vorgenannten Art, die eine feste Verbindung über den Anbaubock mit der Dreipunkthydraulik eines landwirtschaftlichen Schleppers aufweisen, können über diese Dreipunkthydraulik des landwirtschaftlichen Schleppers angehoben werden.

Über das Stützrad mit seinem mit dem Pflugrahmen verbundenen Fahrwerk ist der Drehpflug über das aktive Stützrad abzustützen, das ca. 50 % der Auflagelast des Pfluges übernimmt. Demgegenüber hat bei einem Aufbaupflug ohne aktives Stützrad die Dreipunkthydraulik des landwirtschaftlichen Schleppers die gesamte Auflagelast des Pfluges aufzunehmen. Bei einem Aufsattelpflug, bei dem keine feste Verbindung zwischen der Dreipunkthydraulik des Schleppers besteht, hat das Fahrgestell mit dem Stützrad 100 % der Auflagelast zu übernehmen. Drehpflüge der eingangs genannten Art stellen daher eine Kombination eines Anbaupfluges und eines Aufsattelpfluges dar und werden auch als Hybridpflüge bezeichnet.

Ein derartiger Hybridpflug ist aus der EP 1 731 009 A1 bekannt, bei dem zur Stabilisierung des Pflugrahmens im hinteren Bereich des Drehpfluges ein Stabilisator vorgesehen ist, der das Fahrwerk des Stützrades mit dem Anbaubock verbindet, wobei der Stabilisator kardanisch mit dem Anbaubock verbunden ist. Im praktischen Einsatz können die Pflugscharreihen um das Fahrwerk mit dem Stützrad und den Stabilisator verschwenkt werden, so dass die eine Pflugscharreihe nach einer Verschwenkbewegung in ihre Betriebsstellung gelangt und nach einer gegensinnigen Verschwenkbewegung die andere.

Nachteilig bei dem Drehpflug nach der EP 1 731 009 A1 ist die mangelnde Bodenfreiheit des Drehpfluges durch die Ausbildung des Stabilisators, der in starrer und unveränderbarer Weise abgeknickt ausgebildet ist und sowohl in der Betriebsstellung der jeweiligen Pflugscharreihe als auch in deren Transportstellung einen Abstand zum Erdboden aufweist, der in vielen nicht Fällen ausreicht, und mithin Transportfahrten aber auch Arbeitsfahrten des Drehpfluges nachteilig beeinflusst.

Es ist Aufgabe der Erfindung, diesen Nachteil zu beheben und einen Drehpflug der eingangs genannten Art zur Verfügung zu stellen, bei dem die Bodenfreiheit des Pfluges sowohl während einer Transportfahrt als auch während einer Arbeitsfahrt vergrößert ist.

Zur Lösung dieser Aufgabe zeichnet sich der Drehpflug der eingangs Art durch die kennzeichnenden Merkmale des Anspruches 1aus
Durch das teleskopierbare Stabilisatorteil kann der Stabilisator z.B. nach einem Schwenkvorgang des Pflugrahmens und der entsprechenden Pflugscharreihen aus der einen in die andere Betriebsstellung zunächst eine z.B. abgeknickte Ausbildung haben, jedoch mit dem teleskopierbaren Stabilisatorteil dann nachjustiert werden in z.B. eine zumindest annähernd geradlinige Ausrichtung, wodurch die Knickstelle zumindest annähernd aufgehoben wird und damit die Bodenfreiheit wesentlich zu erhöhen ist.

Um den Stabilisator für die jeweilige Einsatz- und/oder Betriebssituation optimiert ausrichten zu können, ist der Stabilisator über das teleskopierbare Stabilisatorelement aus einer abgeknickten Ausrichtung in eine im Wesentlichen geradlinige Ausrichtung ausrichtbar.

Die Justierausrichtungen können über ein motorisches Stellelement oder einen Kraftheber, beispielsweise Pneumatik- oder Hydraulikzylinder eingeleitet und durchgeführt werden, so dass der bauliche Aufwand nicht erheblich ist, gemessen am vorteilhaften Gewinn der Bodenfreiheit für eine nachfolgende Arbeits- und/oder nachfolgende Transportfahrt. Das teleskopierbare Stabilisatorteil ist gelenkig mit einem benachbarten Teil des Stabilisators verbunden, wobei zwischen dem teleskopierbaren Stabilisatorteil und dem benachbarten Stabilisatorteil der Kraftheber angreifen kann. Der Stabilisator kann einenends über ein Kreuzgelenk oder ein Kugelgelenk mit dem Anbaubock verbunden sein. Die Drehachse des Pflugrahmens geht vorzugsweise durch das Gelenk der Verbindungsstelle zwischen dem Stabilisator und dem Fahrwerk des Stützrades.

Ein optimiertes Verschwenken des Pflugrahmens wird dadurch erreicht, dass die Schwenkachse des Pflugrahmens für die Überführung der einen Pflugscharreihe in ihre Betriebsstellung und zur Überführung der anderen Pflugscharreihe in ihre Betriebsstellung ein Verbindungsgelenk zwischen dem teleskopierbaren Stabilisatorelement und dem Fahrgestell des Stützrades schneidet.

Insgesamt ist damit ein Drehpflug zur Verfügung gestellt mit wesentlich verbesserten Eigenschaften.

Zur weiteren Erläuterung wird auf weitere Unteransprüche, die nachfolgende Beschreibung und die Zeichnung verwiesen. In der Zeichnung zeigen:
- Fig.1: eine perspektivische Seitenansicht eines Ausführungsbeispiels eines Drehpfluges nach der Erfindung mit dem gestreckten Stabilisator,
- Fig.2: vergrößert perspektivisch von der Seite eine Ansicht auf jeweils drei Pflugschare der Pflugscharreihen, den Pflugrahmen und den Stabilisator entsprechend Fig.1,
- Fig.3: eine Ansicht von oben auf das Ausführungsbeispiel nach Fig. 1,
- Fig.4: eine Ansicht von der Seite auf das Ausführungsbeispiel nach Fig.1,
- Fig.5: eine Ansicht von der Seite auf das Ausführungsbeispiel nach Fig.1 ausschnittsweise, in vergrößerter Teilansicht,

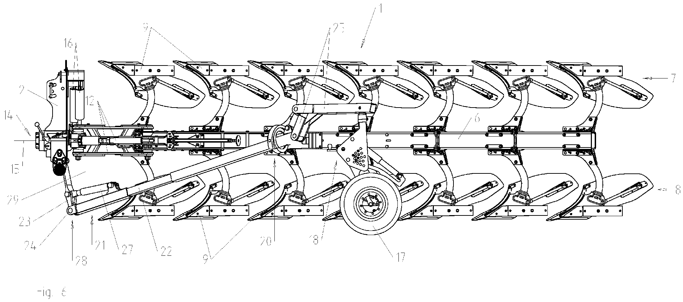

- Fig.6: eine Seitenansicht eines des Drehpfluges mit dem geknickten Stabilisator für den Drehvorgang des Drehpfluges,

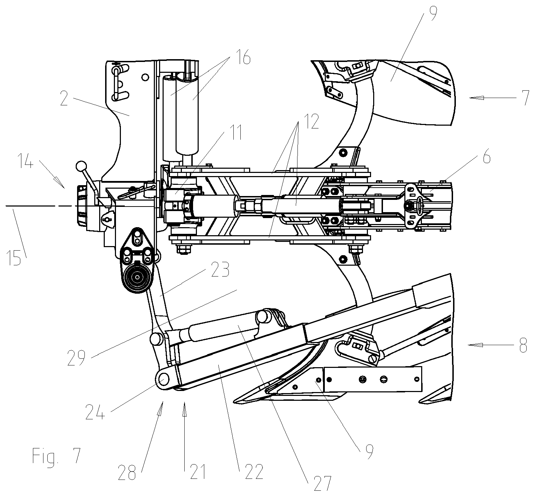

- Fig.7: eine Ansicht von der Seite auf den Drehpflug mit dem geknickten Stabilisator für den Drehvorgang des Drehpfluges nach Fig.6 ausschnittsweise, in vergrößerter Teilansicht und

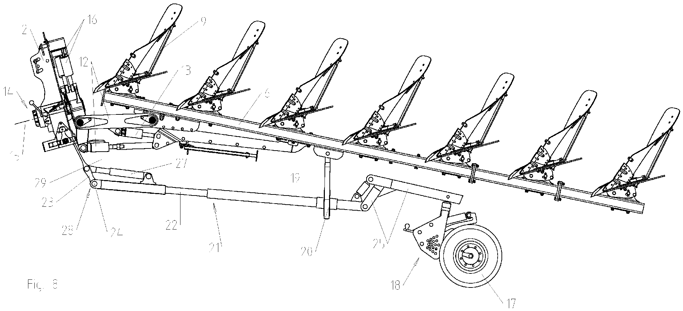

- Fig.8: eine Seitenansicht eines des Drehpfluges mit dem geknickten Stabilisator für den Drehvorgang des Drehpfluges, wobei der Drehpflug in bereits um 90° gedrehter Position, also nach halbem Drehvorgang dargestellt ist.

In der Zeichnung sind grundsätzlich übereinstimmende Teile mit übereinstimmenden Bezugsziffern versehen.

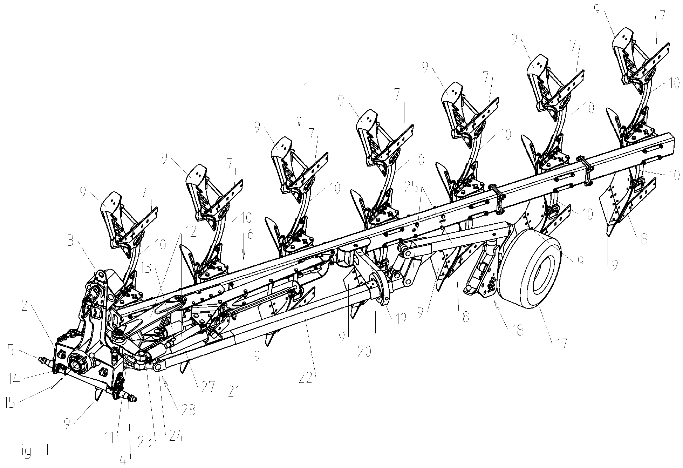

In Fig. 1 ist ein allgemein mit 1 bezifferter Drehpflug gezeigt, der über einen Anbaubock 2 an einen nicht gezeigten Schlepper anzuhängen ist und von diesem während der Arbeitsfahrt gezogen werden kann. Über die nicht gezeigte Dreipunkthydraulik des Schleppers ist der gezeigte Drehpflug anzuheben und auch wieder abzusenken.

Die Anlenkstellen an dem Anbaubock für die Dreipunkthydraulik des landwirtschaftlichen Schleppers sind mit 3, 4 und 5 beziffert. Der Pflugrahmen 6 trägt Pflugscharreihen 7 und 8 mit insgesamt in jeder Pflugscharreihe 7 bzw. 8 sieben Pflugkörpern 9, die über Haltearme 10 am Pflugrahmen abgestützt sind. Der Pflugrahmen 6 ist an dem drehbar angeordneten Auslegerarm 11 über verstellbare Lenker 12 angelenkt, hierüber ist der Pflug in bekannter und daher nicht näher beschriebener Weise in seiner Arbeitsweise und Arbeitsbreite mittels der Einstellmittel 13 einzustellen. Der Auslegerarm 11 ist über seine Drehwelle 14 in dem Drehlager des Anbaubockes 2 um die Drehachse 15 um 180° verdrehbar gelagert. Zum Verdrehen des Pflugrahmens 6 mit den in gegenüberliegenden Pflugscharreihen 7 und 8 angeordneten Pflugkörpern 9 werden die jeweiligen Pflugkörper 9 der Pflugscharreihen 7 und 8 durch die Hydraulikzylinder 16, die zwischen dem oberen Ende des Anbaubockes 2 und dem einen Ende des Auslegerarmes 11 angeordnet sind, in die jeweilige Arbeitsposition in nach beschriebener Weise verschwenkt.

Zusätzlich ist ein Stützrad 17 vorgesehen, welches an einem Fahrwerk 18 abgestützt ist. Dieses Fahrwerk 18 ist über einen weiteren Anbaubock 19 mit dem Pflugrahmen 6 verbunden, wobei der Anbaubock 19 ein Gelenk 20 aufweist mit einer Gelenkachse 21, um die der Pflugrahmen 6 mit seinen Pflugscharreihen 8 und 9 verschwenkt werden kann, so dass das Fahrgestell 18 und das Stützrad 17 auch nach einem Schwenkvorgang in ihrer Position verbleiben, da der Pflugrahmen 6 um das Fahrgestell 18 und das Stützrad 17 verschwenkt werden von einer Betriebsstellung in die andere.

An dem Anbaubock 19 greift ein Stabilisator 21 an, der in dem gezeigten Ausführungsbeispiel aus zwei Teilen besteht und ein teleskopierbares Teil 22 und ein nicht teleskopierbares Teil 23, welches als Schwenkhebel ausgebildet ist, aufweist, die gelenkig durch ein Gelenk 24 miteinander verbunden sind. Das andere Ende des teleskopierbaren Teiles 22 des Stabilisators 21 ist über das Lager des sphärisch ausgestalteten Gelenkes 20 an dem Anbaubock 19 gelagert und über Verbindungselemente 25 mit dem Stützrad 17 und dem Fahrwerk 18 drehfest verbunden. Der Schwenkhebel 23 ist an dem Anbaubock 2 über ein kadarnisches Gelenk, welches als Kreuzgelenk 26 ausgebildet ist, angelenkt. Hierbei ist die Anordnung des Gelenkes 26 an dem Anbaubock 2 unterhalb der Schwenkachse 15 der Drehwelle 14 derart, dass die aufrechte Achse des Kreuzgelenkes 26 die Schwenkachse 15 der Drehwelle 14 schneidet. Somit ist der Stabilisator 21 über seinen Schwenkhebel 23 am Anbaubock 2 vertikal unterhalb der Schwenkachse 15 des Pflugrahmens 6 mit einem Gelenk 26 angelenkt ist An dem teleskopierbaren Teil 22, welches an dem Schwenkhebel 23 mit dem Gelenk 24 angelenkt ist, greift ein Hydraulikzylinder 27 als Kraftheber an, der mit seinem anderen Ende an dem Schwenkhebel 23 angreift.

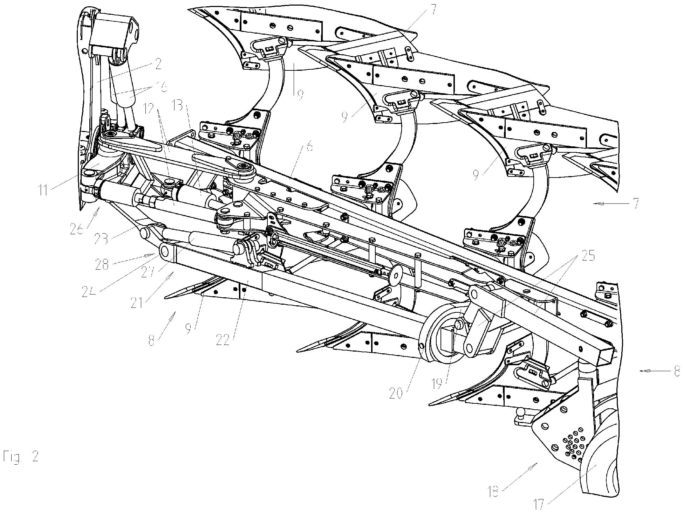

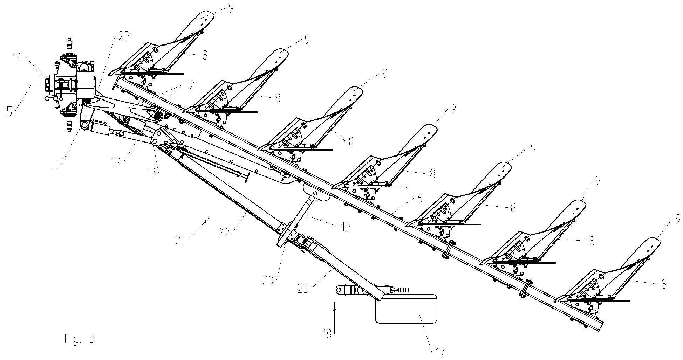

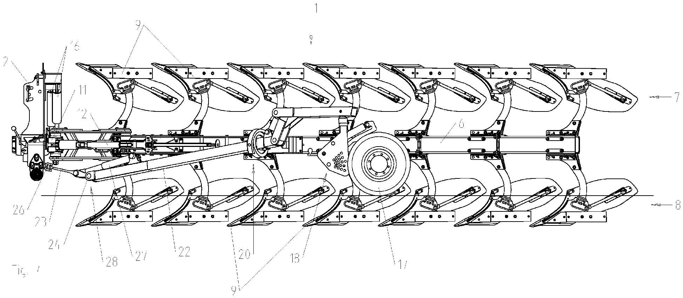

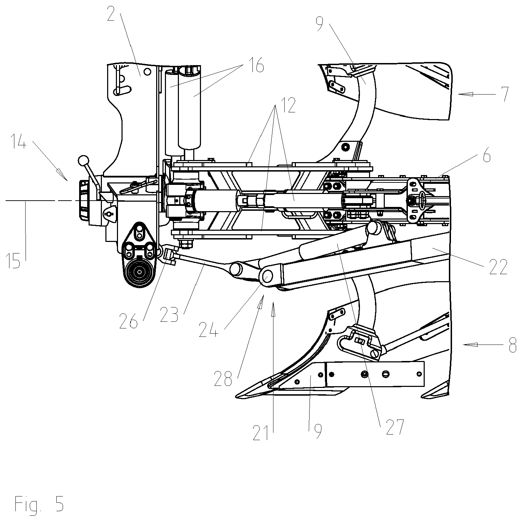

Der Stabilisator 21 des Drehpfluges 1 ist in seiner Einstellung in den Darstellungen in den Fig.1 bis 5 an seiner durch das Gelenk 24 gebildeten in seiner Knickgröße variabel und in veränderbar einstellbarer Weise mit seinen beiden Teilen 22 und 23 mit einer kleinsten Abknickung in seiner Knickstelle 28 in dem Gelenk 24 ausgerichtet. Dies entspricht der Arbeitsstellung beim Pflügen und der Tranportstellung. Diese fast gradlinig gestreckte Ausrichtung des Schwenkhebels 23 und des teleskopierbaren Teils 22 des Stabilisators 21 wird durch das vollständige Ausfahren des Hydraulikzylinders 27 erreicht. In dieser gestreckten Ausrichtung des Stabilisators 21 wird eine große Bodenfreiheit des Stabilisators 21 erreicht.

Wenn der Drehpflug 1 um die Drehachse 15 gedreht wird, um die jeweils gegenüberliegenden Schare 9 der anderen Pflugscharreihe 7 oder 8 in Einsatzposition zu bringen, muss ein entsprechend großer Freiraum 29 zum Durchschwenken des Auslegerarmes 11, der Lenker 12 und Einstellmittel 13 zum Stabilisator 21 vorhanden sein. Um diesen Freiraum 29 zu schaffen wird, durch eine Betätigung des Hydraulikzylinders 27, indem dieser eingezogen wird, die Ausrichtung des Stabilisators 21 verändert, indem das Gelenk 24 durch Abknicken des Schwenkebels 23 und des teleskopierbaren Teiles 22 des Stabilisators 21 zueinander sowie des Auseinanderziehens des telekopierbaren Teiles 22 des Stabilisators 21 abgesenkt wird. Hierdurch entfernt sich der Stabilisator 21 vom Ende des Auslegerarmes 11, der Lenker 12 und Einstellmittel 13, so dass ein ausreichend großer Freiraum 29 zum Durchschwenken dieser Teile 11,13 beim Drehen des Drehpfluges 1 geschaffen wird. Nach erfolgtem Drehen des Drehpfluges 1 wird der Hydraulikzylinder 27 durch entsprechendes Betätigen wieder ausgefahren. Heirdurch werden der Schwenkhebel 23 und das teleskopierbare Teil 22 des Stabilisators 21 wieder in die vorbeschriebene gestreckte Ausrichtung zueinander gebracht. Somit der Stabilisator 21 besonders in seinem Knickbereich wieder angehoben, so dass die beiden Stabilisatorteile 22 und 23 in ihrer Ausrichtung entsprechend verändert und nach oben gezogen werden. Damit geht eine Längenveränderung des teleskopierbaren Stabilisatorteils 22 einher. Damit kann ein wesentliches Maß an Bodenfreiheit gewonnen werden, was sich außerordentlich günstig für die Arbeitsfahrt und die Transportfahrt des Drehpfluges 1 auswirkt.

## Patentansprüche

1. Drehpflug (1) mit einem an einem Anbaubock (2) zur Verbindung des Drehpfluges (1) mit einem landwirtschaftlichen Zugfahrzeug abstützbaren, dreh- und/oder schwenkbar ausgebildeten Pflugrahmen (6) und mit auf gegenüberliegenden Seiten des Pflugrahmens (6) angeordneten Pflugscharreihen (7, 8) mit Pflugkörpern (9), wobei durch eine über eine Antriebsvorrichtung eingeleitete Drehbewegung des Pflugrahmens (6) wahlweise die eine oder die andere Pflugscharreihe (7, 8) in ihre Betriebsstellung oder in ihre Außerbetriebsstellung überführbar ist und mit einem den Pflugrahmen (6) in der Betriebsstellung der einen Pflugscharreihe (7, 8) und den Pflugrahmen (6) in der Betriebsstellung der anderen Pflugscharreihe (7, 8) auf dem Erdboden abstützenden, über ein Fahrgestell (18) mit dem Pflugrahmen (6) verbundenen Stützrad (17), wobei das Fahrgestell (18) des Stützrades (17) über einen eine Knickstelle aufweisenden Stabilisator (21) mit dem Anbaubock (2) kardanisch verbunden ist und der Pflugrahmen (6) um eine Dreh- oder Schwenkachse um den Stabilisator (21), das Fahrgestell (18) und das Stützrad (17) verschwenkbar ist, **dadurch gekennzeichnet, dass** der Stabilisator (21) zumindest zweiteilig ausgebildet ist und ein teleskopierbares Stabilisatorteil (22) aufweist, dass das teleskopierbare Stabilisatorteil (22) gelenkig mit einem, vorzugsweise als Schwenkhebel ausgebildeten benachbarten Teil (23) des Stabilisators (21) verbunden ist, dass der Stabilisator (21) aus einem am Anbaubock (2) mittels eines Gelenkes (26) angelenktem Schwenkhebel (23) und dem am Schwenkhebel (23) mittels eines weiteren Gelenkes angelenkten teleskopierbaren Stabilisatorteil (22) besteht, dass an dem teleskopierbaren Stabilisatorteil (22) ein Kraftheber (27) angreift und das teleskopierbare Stabilisatorteil (22) über diesen Kraftheber (27) längenveränderbar ist, dass der Stabilisator (21) über das teleskopierbare Stabilisatorelement (22) aus einer abgeknickten Ausrichtung in eine im Wesentlichen geradlinige Ausrichtung ausrichtbar ist.

2. Drehpflug nach zumindest einem der vorstehenden Ansprüchen, **dadurch gekennzeichnet, dass** der Stabilisator (21) über seinen Schwenkhebel (23) am Anbaubock (2) vertikal unterhalb der Schwenkachse des Pflugrahmens (6) mit einem Gelenk (26) angelenkt ist.

3. Drehpflug nach zumindest einem der vorstehenden Ansprüchen, **dadurch gekennzeichnet, dass** der Kraftheber (27) zwischen dem Schwenkhebel (23) und dem am Schwenkhebel (23) angelenkten Teil des teleskopierbaren Stabilisatorelementes (22) angeordnet ist.

4. Drehpflug nach zumindest einem der vorstehenden Ansprüchen, **dadurch gekennzeichnet, dass** der Kraftheber (27) als Hydraulikzylinder ausgebildet ist.

5. Drehpflug nach zumindest einem der vorstehenden Ansprüchen, **dadurch gekennzeichnet, dass** der Kraftheber (27) als Pneumatikzylinder ausgebildet ist.

6. Drehpflug nach zumindest einem der vorstehenden Ansprüchen, **dadurch gekennzeichnet, dass** der Stabilisator (21) über ein Kreuzgelenk (26) einenends mit dem Anbaubock (2) verbunden ist.

7. Drehpflug nach zumindest einem der vorstehenden Ansprüchen, **dadurch gekennzeichnet, dass** der Stabilisator (21) einenends über ein Kugelgelenk mit dem Anbaubock (2)) verbunden ist.

8. Drehpflug nach zumindest einem der vorstehenden Ansprüchen, **dadurch gekennzeichnet, dass** die Schwenkachse des Pflugrahmens (6) für die Überführung der einen Pflugscharreihe (7, 8) in ihre Betriebsstellung und zur Überführung der anderen Pflugscharreihe (7, 8) in ihre Betriebsstellung ein Verbindungsgelenk (20) zwischen dem teleskopierbaren Stabilisatorelement (22) und dem Fahrgestell (18) des Stützrades (17) schneidet.

## Claims

1. Reversible plough (1) with a plough frame (6) which can be supported on a headstock (2) for connecting the reversible plough (1) to an agricultural tractor and is designed to be rotatable and/or pivotable, and with rows of ploughshares (7, 8) which are arranged on opposite sides of the plough frame (6) and have plough bodies (9), wherein, by means of a rotational movement of the plough frame (6) initiated via a driving device, either the one or the other row of ploughshares (7, 8) is transferrable into the operating position thereof or into the non-operating position thereof, and with a supporting wheel (17) which supports the plough frame (6) in the operating position of the one row of ploughshares (7, 8) and the plough frame (6) in the operating position of the other row of ploughshares (7, 8) on the ground and is connected to the plough frame (6) via a chassis (18), wherein the chassis (18) of the supporting wheel (17) is cardanically connected to the headstock (2) via a stabilizer (21) having a buckling point, and the plough frame (6) is pivotable about an axis of rotation or pivot axis about the stabilizer (21), the chassis (18) and the supporting wheel (17), **characterized in that** the stabilizer (21) is formed in at least two parts and has a telescopic stabilizer part (22), **in that** the telescopic stabilizer part (22) is connected in an articulated manner to an adjacent part (23) of the stabilizer (21), which part is preferably designed as a pivot lever, **in that** the stabilizer (21) consists of a pivot lever (23) coupled to the headstock (2) by means of a joint (26) and of the telescopic stabilizer part (22) coupled to the pivot lever (23) by means of a further joint, **in that** a power lifter (27) acts on the telescopic stabilizer part (22), and the telescopic stabilizer part (22) is changeable in length via said power lifter (27), and **in that** the stabilizer (21) can be oriented via the telescopic stabilizer element (22) from a bent orientation into a substantially rectilinear orientation.

2. Reversible plough according to at least one of the preceding claims, **characterized in that** the stabilizer (21) is coupled via its pivot lever (23) to the headstock (2) vertically below the pivot axis of the plough frame (6) with a joint (26).

3. Reversible plough according to at least one of the preceding claims, **characterized in that** the power lifter (27) is arranged between the pivot lever (23) and that part of the telescopic stabilizer element (22) which is coupled to the pivot lever (23).

4. Reversible plough according to at least one of the preceding claims, **characterized in that** the power lifter (27) is designed as a hydraulic cylinder.

5. Reversible plough according to at least one of the preceding claims, **characterized in that** the power lifter (27) is designed as a pneumatic cylinder.

6. Reversible plough according to at least one of the preceding claims, **characterized in that** the stabilizer (21) is connected at one end to the headstock (2) via a cross joint (26).

7. Reversible plough according to at least one of the preceding claims, **characterized in that** the stabilizer (21) is connected at one end to the headstock (2) via a ball and socket joint.

8. Reversible plough according to at least one of the preceding claims, **characterized in that** the pivot axis of the plough frame (6) for transferring the one row of ploughshares (7, 8) into the operating position thereof and for transferring the other row of ploughshares (7, 8) into the operating position thereof intersects a connecting joint (20) between the telescopic stabilizer element (22) and the chassis (18) of the supporting wheel (17).

## Revendications

1. Charrue réversible (1) présentant
un bâti de charrue (6) apte à être fixé à rotation et/ou à pivotement sur un chevalet de montage (2) pour relier la charrue réversible (1) à un véhicule agricole tracteur et
des rangées (7, 8) de socs de charrue dotées de corps (9) de charrue et disposées sur des côtés opposés du bâti de charrue (6),
un déplacement de rotation du bâti de charrue (6) réalisé à l'aide d'un ensemble d'entraînement permettant de transférer sélectivement l'une ou l'autre des rangées (7, 8) de socs de charrue dans leur position de fonctionnement ou dans leur position de non fonctionnement,
une roue de soutien (17) reliée au bâti de charrue (6) par l'intermédiaire d'un train de roulement (18) et appuyant sur le sol le bâti de charrue (6) lorsqu'une rangée (7, 8) de socs de charrue est en position de fonctionnement et soutenant le bâti de charrue (6) lorsque l'autre rangée (7, 8) de socs de charrue est en position de fonctionnement,
le train de roulement (18) de la roue de soutien (17) étant relié par cardan au chevalet de montage (2) par l'intermédiaire d'un stabilisateur (21) qui présente un emplacement coudé et le bâti de charrue (6) pouvant pivoter autour d'un axe de rotation ou de pivotement autour du stabilisateur (21), du train de roulement (18) et de la roue de soutien (17), **caractérisée en ce que**
le stabilisateur (21) est réalisé en au moins deux parties et présente une partie télescopique (22) de stabilisateur,
**en ce que** la partie télescopique (22) du stabilisateur est reliée de manière articulée à une partie voisine (23) du stabilisateur (21) réalisée de préférence comme levier pivotant,
**en ce que** le stabilisateur (21) est constitué d'un levier pivotant (23) articulé au moyen d'une articulation (26) sur le chevalet de montage (2) ainsi que de la partie télescopique (22) du stabilisateur articulée sur le levier pivotant (23) au moyen d'une autre articulation,
**en ce qu'**un dispositif de relèvement (27) s'engage sur la partie télescopique (22) du stabilisateur et **en ce que** la longueur de la partie télescopique (22) du stabilisateur peut être modifiée à l'aide de ce dispositif de relèvement (27) et
**en ce que** le stabilisateur (21) peut être aligné depuis une orientation coudée jusque dans une orientation essentiellement rectiligne par l'intermédiaire de l'élément télescopique (22) du stabilisateur.

2. Chariot réversible selon au moins l'une des revendications précédentes, **caractérisé en ce que** le stabilisateur (21) est articulé sur le chevalet de montage (2), verticalement en dessous de l'axe de pivotement du bâti de chariot (6), à l'aide d'une articulation (26) et par l'intermédiaire de son levier pivotant (23).

3. Charrue réversible selon au moins l'une des revendications précédentes, **caractérisée en ce que** le dispositif de relèvement (27) est disposé entre le levier pivotant (23) et la partie de l'élément télescopique (22) du stabilisateur articulée sur le levier pivotant (23).

4. Charrue réversible selon au moins l'une des revendications précédentes, **caractérisée en ce que** le dispositif de relèvement (27) est configuré comme vérin hydraulique.

5. Charrue réversible selon au moins l'une des revendications précédentes, **caractérisée en ce que** le dispositif de relèvement (27) est configuré comme vérin pneumatique.

6. Charrue réversible selon au moins l'une des revendications précédentes, **caractérisée en ce que** le stabilisateur (21) est relié à une extrémité au chevalet de montage (2) par l'intermédiaire d'une articulation en croix (26).

7. Charrue réversible selon au moins l'une des revendications précédentes, **caractérisée en ce que** le stabilisateur (21) est relié par une extrémité au chevalet de montage (2) par l'intermédiaire d'une articulation sphérique.

8. Charrue réversible selon au moins l'une des revendications précédentes, **caractérisée en ce que** l'axe de pivotement du bâti de charrue (6) coupe une articulation de liaison (20) entre l'élément télescopique (22) du stabilisateur et le train de roulement (18) de la roue de soutien (17) pour permettre le transfert d'une rangée (7, 8) de socs de charrue dans sa position de fonctionnement et amener l'autre rangée (7, 8) de socs de charrue dans sa position de fonctionnement.
